# EUROPEAN PATENT SPECIFICATION

(11) **EP 1 319 759 B1**
(45) Date of publication and mention of the grant of the patent: **18.05.2005**
(21) Application number: 01903795.1
(22) Date of filing: 08.02.2001
(51) Int. Cl.: E02D 27/34, E04H 9/02

(54) **MODULAR ANTI-SEISMIC PROTECTION ARRAY THAT CAN BE USED IN THE PRESERVATION OF BUILDINGS AND THE LIKE**
MODULARE ANTISEISMISCHE VORRICHTUNG ZUM SCHUTZ VON GEBÄUDEN
DISPOSITIF MODULAIRE DE PROTECTION CONTRE LES SEISMES POUVANT ETRE APPLIQUE A LA CONSERVATION DE BATIMENTS ET ANALOGUES

(30) Priority: 22.09.2000 ES 200002303
(43) Date of publication of application: 18.06.2003
(73) Proprietor: Innovacion Y Diseno Orovay S.L., 46700 Gandia (ES)
(72) Inventor: SIGNES OROVAY, Vicente, Poligono Indust. Alcodar, E-46700 Gandia (ES); SIGNES OROVAY, Salvador J., Poligono Ind. Alcodar, E-46700 Gandia (ES)
(74) Representative: Maldonado Jordan, Julia
(86) International application number: PCT/ES2001/000036
(87) International publication number: WO 2002/025020

(56) References cited:
- EP-A- 0 545 570
- WO-A-96/07035
- DE-A- 3 611 809
- DE-A- 3 905 208
- FR-A- 1 059 780
- US-A- 4 887 398

## Description

### OBJECT OF THE INVENTION

This invention is a modular anti-seismic protection device to be used in buildings and similar constructions, the aim of which is clearly to provide such buildings and similar constructions with a modular base that consists of identical components whose function is to dampen, dissipate and cancel out the seismic wave, thereby preventing the tremor from having harmful effects on the building that is being protected.

### SPHERE OF APPLICATION FOR THE INVENTION

This invention is to be applied in the industry that specialises in the manufacture of items of apparatus, devices and elements used to protect constructions.

### BACKGROUND OF THE INVENTION

Several solutions have been devised to dampen or render harmless the effects of earthquakes, and most of them are based upon the use of elastic elements that absorb the seismic waves.

The German Patent (DE-3446831) describes an elastic body to be used as a support for constructions, in the form of a shaped strip with inner seatings that run lengthways in two rows and that are staggered crosswise, in such a way that the particular layout of this strip and the elastomeric material that it is made of, enable it to absorb considerable vertical stress.

A fairly similar structure is described in the German patent (DE-3935354).

The English Patent (GB-2,120,167) describes a deformable structure consisting of two plates separated by an abscission layer containing material, such as foam, for example, that becomes compressed under pressure. As an alternative, this structure can take the form of a honeycomb, and subjects the aforementioned plates to a process of elastic deformation bringing them closer together.

The French Patent (2,510,645) describes a cell that acts against earthquakes. The cell is prismatic and eight-sided in shape and is designed to fit in juxtaposition with other similar cells; its purpose is also to dampen momentary and vertical excessive stresses, such as those caused by an earthquake.

The French Patent (2,391,324) also describes a system for protection against earthquakes. It consists of a steel plate that separates the construction itself from the foundations, in order to prevent the possibility of the cracks that appear in the foundations from spreading to the building.

A similar solution appeared in the PCT WO98/57013, the only difference being that an isolating elastomeric support is used instead of the steel plate; this support consists of inlaid pre-stressed fibres and is extremely rigid, and these fibres are laid horizontally inside it.

PCT WO96/30602 describes a system for protecting buildings, in which the buildings are founded on a flat structure suspended by hydraulic jacks that also dampen the seismic vibrations.

The U.S. Patent (4,959,934) describes an elastoplastic damper to be used in a structure, for example, to absorb the vibrations that buildings are subjected to by seismic movements; this damper consists of a piece that looks like a block or a sheet of metal with a number of separated openings that cover the whole surface, with a view to giving it the required elastic deformability.

The U.S. Patent (4,555,433) describes an element for acoustic absorption comprising small plates and hollows that look like a small bowl, arranged in the form of a grid, so that if an element of this type is given the right structural rigidity, it can be used as a means for damping the vibrations caused by earthquakes, instead of being used as a means for damping acoustic vibrations.

The European Patent (EP 0889179) describes a construction bridge for absorbing shocks, which consists of a series of horizontal parts arranged in series and vertical parts that serve to support the former, linked by means of absorbers that dampen any shock wave, such as the waves caused by an earthquake.

The European Patent (EP 0481146 A1) describes a composite construction to cope with seismic movements, which is composed of a series of modules that are supported on the ground without foundations, and which support each other without any type of vertical connection, in such a way that each one of them can move in an unrestricted way crosswise with respect to the adjacent modules.

U.S. Patent (4,782,913) describes a construction element with acoustic properties, which is equipped with a core that either has a grille or is cellular; this device can absorb most acoustic waves, and if this element is properly structured it will also be able to dampen the vibrations caused by earthquakes.

The European Patent (EP 0 545 570 A1) discloses a device according to the preamble of claim 1.

### DESCRIPTION OF THE INVENTION

The modular anti-seismic protection device to be used in buildings and similar constructions that is proposed, is clearly a novelty in its specific field of application, because it brings together a series of special features that specifically set it apart from the other elements that are applied for this purpose.

More specifically, every module forming part of the modular anti-seismic protection device to be used in buildings and similar constructions is made up of two parts, made of plastic, with a regular hexagonal plan view, and a used car tyre is inserted between them; the two parts made of plastic are preferably joined by a silemblock, equipped with the appropriate link to the parts that are made of plastic; this silemblock also allows the car tyre contained inside it to bend.

One of the parts made of plastic is provided with a hole going through it, equipped with a lid, through which a plurality of spherical parts that form a granulated plastic element, whose effect is hydraulic, can be inserted into the inner part made up of the car tyre and the two pieces of hexagonal plastic joined together by the silemblock.

A hexagonal shape has been chosen for the aforementioned pieces of plastic material, because in this form not only can the circle formed by the car tyre be inserted into this hexagon, but it is also possible for the different modules to be perfectly coupled to each other in the form of a quincunx, that is to say, in a form that is similar to a honeycomb. However, it is quite clear that the hexagonal form is not the only shape that can be used, and the plastic parts could just as well be triangular, quadrangular, pentagonal or polygonal, and in general, these parts could have any other number of sides, as long as these pieces of plastic are at a tangent to each other and allow for the car tyres to be placed inside them, after the different modules have been assembled, so that when the effects of the stress exerted by a seismic wave are felt by a module, perpendicular to the general plane thereof, the car tyre is exposed to a radial deformation, as a result of the hydraulic effect of the granulated element, and most of this effect is dampened by the modules as a result of the volumes of deformation that takes place between the car tyres.

As a result, these parts will remain in a state of rest. However, this situation will obviously change if there is an earthquake that brings this device into action, in which case it will dampen the seismic wave that the seismic movement brings about.

### DESCRIPTION OF THE DRAWINGS

By way of a supplement to the description that is being given and with a view to making it easier to understand the characteristics of the invention, a set of drawings are enclosed as an essential part of this description. These drawings are illustrative in nature and in no way limiting, and show an example of one of the best ways to put this invention to practical use.

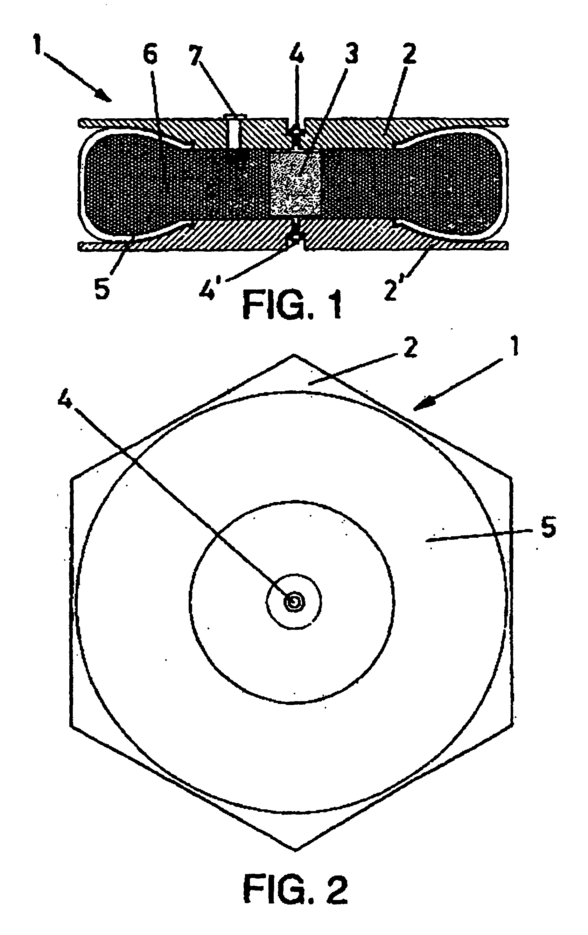

Figure 1 shows a side elevation view and a diametrical cross-section of a module forming part of the modular anti-seismic protection device to be used in buildings and similar constructions that is the object of this invention, represented at rest (or "represented when idle").
Figure 2 shows a plan view of the object that can be seen in Figure 1.
Figure 3 shows a view of the object that can be seen in Figures 1 and 2 when it is operating.

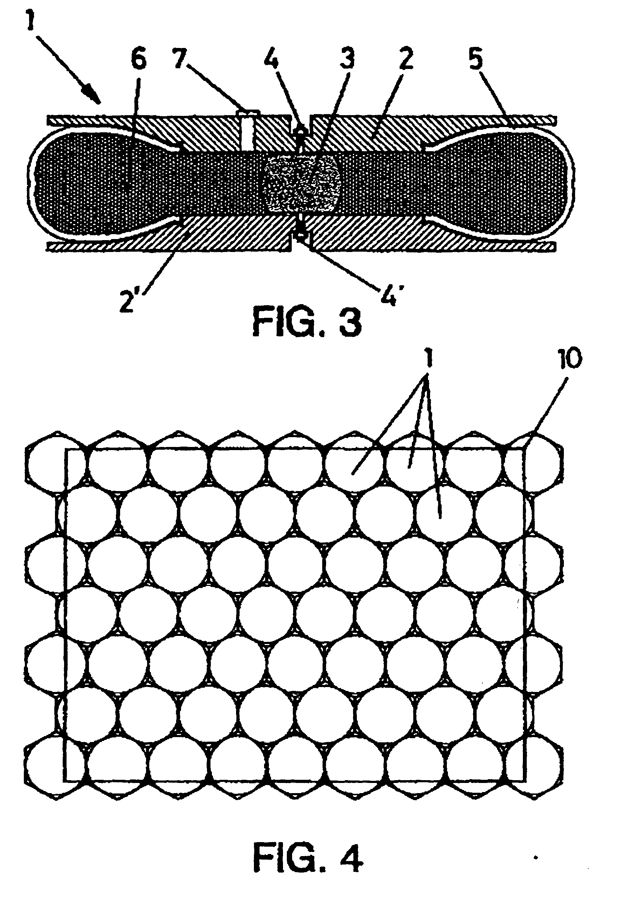

And finally, Figure 4 shows a plan of the modular anti-seismic device, and the invention consists of modules like the one shown in the three preceding figures. It is located at the base of the building before work begins on laying the concrete.

### DESCRIPTION OF A PREFERRED EMBODIMENT

It can be seen from Figure 4 that the modular anti-seismic protection device to be used in buildings and similar constructions is made up of a number of modules (1) that are positioned on the same plane and adjacent to each other with their sides in contact, each one of which is structured with two identical parts of plastic material (2) and (2'), preferably joined to each other by means of a silemblock (3), which is held in place by two retaining devices (4) and (4') for the parts (2) and (2'). With a view to holding it in place, two retaining nuts made of plastic material have been inserted into the gap between the central zone of the parts (2) and (2').

A used car tyre (5), of the type that is normally used by automobiles, is inserted between the parts (2) and (2') that are held in place by the silemblock (3) before the former are joined together. A series of spherical or oval plastic parts are inserted into the space that is left inside the parts (2) and (2') located in the same positions holding the car tyre (5) in place; they constitute a granulated system (6) that has a hydraulic effect. The spherical or oval plastic parts are inserted through a hole (7), made in the plastic part (2), equipped with a cover seal for safety purposes.

As can be seen in Figure 4, a number of modules (1) are placed on the same plane, lying on the ground in the zone where the building concerned is to be constructed. To be precise, they are laid at the bottom of the excavation works that have been dug for the foundations; this guarantees an even hexagonal arrangement for the plastic parts (2) and (2') and ensures that they fit into each other perfectly, so that the modular layout has two flat, parallel and largely unbroken surfaces, between which the tyres (5) are inserted, at a tangent to each other, arranged in the form of a quincunx, leaving small triangular voids with curved sides, in such a way that the slabs or foundation plates (10) can then be laid on this modular but continuous surface; the structure of the building is then, in turn, constructed on those slabs or foundation plates (10).

In the event of seismic movements, the upward movement that the lower plastic plate (2') is subjected to, lifted against the weight of the building, causes the granulated plastic material (6) contained by the car tyre (5), to move horizontally, and the latter is subjected to radial deformation, as can be seen in an exaggerated way in Figure 3, in such a way that as the different car tyres (5) that form part of the arrangement are at a tangent to each other, the deformation takes place towards the voids in the triangular layout, and the size of these spaces is sufficient to absorb the deformation, giving rise to an elastic effect, that is to say, the elements involved return to their original position before the earthquake occurred, as soon as the impact of the seismic wave has been dampened.

## Claims

1. A modular anti-seismic protection device to be used in buildings and similar constructions, the purpose of which is to establish an elastically deformable layer between the ground and the foundation plates or slabs of the building, **characterised in that** it consists of a number of modules (1) in the same plane, at a tangent to each other, each one of said modules being made of two identical parts of rigid plastic material (2) and (2') secured to each other in the centre thereof, preferably with a silemblock (3), a car tyre (5) filled with granulated plastic elements (6) is placed between said parts around their perimeter, thereby creating a deformable elastic chamber.

2. A modular anti-seismic protection device according to claim 1, **characterised in that** the rigid plastic parts (2) and (2') are adapted on the inside and in shape to the form of the car tyre (5) and **in that** they are attached to each other with retaining nuts (4) and (4') which are concealed in recesses in said parts (2) and (2') and whereby part (2) lies at the top and is provided with a hole (7) equipped with a sealed cover which is used to gain access to the inside of the chamber that is filled with granulated plastic elements.

## Patentansprüche

1. Ein für den Einsatz in Gebäuden und ähnlichen Bauten zu verwendender modularer Erdbebenschutz, dessen Zweck darin besteht, zwischen Erdboden und Fundament- oder Bodenplatten des Gebäudes eine elastisch verformbare Schicht herzustellen, die sich **dadurch kennzeichnet, dass** sie aus einer Anzahl von Modulen (1) in gleicher Ebene besteht, die sich zueinander auf einer Tangente befinden, wobei jedes dieser Module aus zwei gleichen Teilen eines steifen Kunststoffmaterials (2) und (2') hergestellt ist, die gegenseitig in deren Mitte gesichert sind, was vorzugsweise mit einem Silentbloc (3) geschieht, wobei ein mit gekörnten Kunststoffelementen (6) gefüllter Autoreifen (5) umfangsseitig zwischen diese Teile gelegt wird, wodurch eine verformbare elastische Kammer entsteht.

2. Ein modularer Erdbebenschutz gemäß Patentanspruch 1, der sich **dadurch kennzeichnet, dass** die steifen Kunststoffteile (2) und (2') auf der Innenseite und in ihrer Form an den Autoreifen (5) angepasst und mit Haltemuttern (4) und (4') aneinander befestigt sind, die in Aussparungen an diesen T eilen (2) u nd (2') verborgen sind, wobei T eil (2) o ben liegt u nd mit einem Loch (7) versehen ist, das mit einer abgedichteten Abdeckung ausgestattet ist, die benutzt wird, um Zugang zum Inneren der Kammer zu erhalten, die mit gekörnten Kunststoffelementen gefüllt ist.

## Revendications

1. Un dispositif de protection antisismique modulaire à utiliser dans les immeubles et constructions similaires, dont l'objectif est de former une couche déformable par élasticité entre le sol et les plaques de base ou dalles de l'immeuble, **caractérisé par le fait qu'**il consiste en un certain nombre de modules (1) sur le même plan, tangents l'un par rapport à l'autre, chacun des dits modules étant fait de deux pièces identiques de matériau en plastique rigide (2) et (2'), fixées l'une à l'autre en leur centre, de préférence avec un silentbloc (3) ; un pneu de voiture (5) rempli d'éléments en plastique granulé (6) est placé entre les dites parties autour de leur périmètre, créant ainsi une chambre élastique déformable.

2. Un dispositif de protection antisismique modulaire conformément à la revendication 1, **caractérisé par le fait que** les pièces en plastique rigide (2) et (2') sont adaptées, à l'intérieur et en forme, à la forme du pneu de voiture (5) et qu'elles sont fixées l'une à l'autre par des écrous autobloquants (4) et (4') qui sont dissimulés dans des évidements dans les dites pièces (2) et (2') et où la pièce (2) repose sur le dessus et est dotée d'un trou (7) équipé d'un couvercle étanche qui s'utilise pour accéder à l'intérieur de la chambre qui est remplie d'éléments en plastique granulé.
